# EUROPÄISCHE PATENTANMELDUNG

(11) **EP 2 974 903 A1**
(43) Veröffentlichungstag der Anmeldung: **20.01.2016**
(21) Anmeldenummer: 15176423.0
(22) Anmeldetag: 13.07.2015
(51) Int. Cl.: B60L 11/18

(54) **LOKALES LADENETZ MIT WENIGSTENS EINEM LADESYSTEM ZUM LADEN VON ELEKTROFAHRZEUGEN, LADESYSTEM MIT WENIGSTENS EINER LADESTATION UND VERFAHREN ZUM BETREIBEN EINES LADENETZES MIT WENIGSTENS EINEM LADESYSTEM ZUM LADEN VON ELEKTROFAHRZEUGEN**

(30) Priorität: 15.07.2014 DE 102014109939
(71) Anmelder: EnBW Energie Baden-Württemberg AG, 76131 Karlsruhe (DE)
(72) Erfinder: Ehrenfeld, Lars, 74199 Untergruppenbach (DE); Hengerer, Timm, 74394 Hessigheim (DE); Niehaus, Thorsten, 76199 Karlsruhe (DE); Walch, Lars, 76307 Karlsbad (DE)
(74) Vertreter: Kaufmann, Ursula Josefine

(57) **Zusammenfassung**

Die Erfindung betrifft ein lokales Ladenetz (500) mit wenigstens einem Ladesystem (200) zum Laden von Elektrofahrzeugen (10), umfassend wenigstens eine Ladestation (100), wenigstens eine Stromversorgung (110), wenigstens eine Steuer- und/oder Regeleinrichtung (130), wobei die wenigstens eine Ladestation (100) wenigstens eine Ladevorrichtung (140) für ein Elektrofahrzeug (10) aufweist, wobei die wenigstens eine Ladestation (100) zur Ausgabe von Wechselstrom und Gleichstrom ausgebildet ist, wobei die Steuer- und/oder Regeleinrichtung (130) mit der wenigstens einen Ladevorrichtung (140) der Ladestation (100) gekoppelt ist, um eine Stromabgabe an der Ladevorrichtung (140) zu beeinflussen. Die wenigstens eine Ladevorrichtung (140) umfasst wenigstens ein Anschlusselement (300), welches sowohl einen Bereich (320) zum Beaufschlagen mit Gleichstrom als auch einen Bereich (330) zum Beaufschlagen mit Wechselstrom aufweist, wobei das Anschlusselement (300) abhängig von einem Signal der Steuer- und/oder Regeleinrichtung (130) wahlweise mit Gleichstrom oder mit Wechselstrom beaufschlagbar ist.

Die Erfindung betrifft auch ein Verfahren zum Betreiben eines Ladenetzes sowie ein Ladesystem.

## Beschreibung

### Stand der Technik

Die Erfindung betrifft ein lokales Ladenetz mit wenigstens einem Ladesystem zum Laden von Elektrofahrzeugen, ein Ladesystem mit wenigstens einer Ladestation und ein Verfahren zum Betreiben eines Ladenetzes mit wenigstens einem Ladesystem zum Laden von Elektrofahrzeugen.

Aus der DE 10 2009 039 884 A1 ist eine Ladestation bekannt, die Elektrofahrzeuge mit Photovoltaikstrom versorgt, der mit einem an der Ladesäule angeordneten Photovoltaikmodul erzeugt wird. Der Photovoltaikstrom dient ebenso zum Antrieb sowie zur Steuerung der Nachführung des Photovoltaikmoduls.

Photovoltaikstrom wird hierzu in einer Batterieeinheit zwischengespeichert, der ein Wechselrichter zugeordnet ist, welcher den Photovoltaikstrom auf eine geeignete Wechselspannung für den elektrischen Modulantrieb und die Steuereinheit umsetzt. Ferner ist die Batterieeinheit ausgangsseitig mit einem Ladegerät verbunden, das beispielsweise eine Wechselspannung in Höhe von 230 V oder eine andere Spannung für das Aufladen der Elektrofahrzeugen bereitstellt. Hierzu ist dem Ladegerät ein Inverter mit einem Wechselrichter zugeschaltet, der den Gleichstrom aus der Batterieeinheit und dem Photovoltaikelement in Wechselstrom umwandeln kann. Damit können die an den Elektrofahrzeugen vorhandenen Ladegeräte für 230 V eingesetzt werden.

Die Elektrofahrzeuge werden über ein fahrzeugseitiges Elektrokabel geladen, das mit dem von außen zugänglichen Stromanschluss. Soll das Aufladen direkt von der Solarsäule mit Gleichstrom erfolgen, ist dem jeweiligen Stromanschluss ein Ladegerät mit Ladekabel zugeordnet.

Überschüssiger Photovoltaikstrom kann in ein Versorgungsnetz eingespeist werden, während für einen Notfallbetrieb auch eine Stromeinspeisung aus dem Versorgungsnetz in die Ladeeinrichtung erfolgen kann.

### Offenbarung der Erfindung

Die Aufgabe der Erfindung ist es, ein lokales Ladenetz mit wenigsten einem Ladesystem zu schaffen, welches die Ladeinfrastruktur elektrischer Verbraucher für den Benutzer vereinfacht und komfortabler macht.

Eine weitere Aufgabe besteht in der Schaffung eines Ladesystems mit wenigstens einer Ladestation, insbesondere für ein derartiges Ladesystem.

Eine weitere Aufgabe ist es, ein Verfahren zum Betreiben eines solchen Ladenetzes anzugeben.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Die Erfindung geht aus von einem lokalen Ladenetz mit wenigstes einem Ladesystem zum Laden von Elektrofahrzeugen, umfassend wenigstens eine Ladestation, eine Stromversorgung, wenigstens eine Steuer- und/oder Regeleinrichtung, wobei die wenigstens eine Ladestation wenigstens eine Ladevorrichtung für ein Elektrofahrzeug aufweist, wobei die wenigstens eine Ladestation zur Ausgabe von Wechselstrom (AC-Strom) und von Gleichstrom (DC-Strom) ausgebildet ist, wobei die Steuer- und/oder Regeleinrichtung mit der wenigstens einen Ladevorrichtung der Ladestation gekoppelt ist, um eine Stromabgabe an der Ladevorrichtung zu beeinflussen.

Es wird vorgeschlagen, dass die wenigstens eine Ladevorrichtung wenigstens ein Anschlusselement umfasst, welches sowohl einen Bereich zum Beaufschlagen mit Gleichstrom als auch einen Bereich zum Beaufschlagen mit Wechselstrom aufweist, wobei das Anschlusselement abhängig von einem Signal der Steuer- und/oder Regeleinrichtung wahlweise mit Gleichstrom oder mit Wechselstrom beaufschlagbar ist.

Das Anschlusselement der Ladevorrichtung kann eine Buchse oder ein Stecker sein. Die wenigstens eine Ladevorrichtung stellt die Schnittstelle zwischen Ladestation und Elektrofahrzeug dar. Vorteilhaft kann während des Ladens die Stromversorgung der Ladevorrichtung von Wechselstrom auf Gleichstrom und umgekehrt umgestellt werden, ohne dass ein Nutzer die Ladevorrichtung wechseln muss. Eine Ladeverbindung, z.B. ein Ladekabel, zwischen Ladevorrichtung und Elektrofahrzeug muss beim Wechsel zwischen Gleichstrom und Wechselstrom nicht gewechselt werden. Insbesondere kann ein Umstecken eines Ladekabels von einer Ladevorrichtung zu einer anderen Ladevorrichtung unterbleiben. Ein Wechsel zwischen Gleichstrom und Wechselstrom erfordert keinen Wechsel der Ladeverbindung. So kann bequem beispielsweise mit Gleichstrom, insbesondere mit Photovoltaikstrom einer lokal vorhandenen Photovoltaikanlage, geladen werden. Denkbar sind auch andere Gleichstromquellen, beispielsweise Brennstoffzellen. Ist die Menge an verfügbarem Gleichstrom nicht ausreichend, so kann intern im Ladesystem auf eine Wechselstromversorgung umgeschaltet werden und mit Wechselstrom, etwa aus einem Versorgungsnetz, weitergeladen werden.

Vorteilhaft erfolgt demnach die Entscheidung, ob mit Wechselstrom oder Gleichstrom geladen wird, nicht im angeschlossenen Elektrofahrzeug, sondern seitens des lokalen Ladenetzes, beispielsweise in dem wenigstens einen Ladesystem. Zweckmäßigerweise kann die Steuer- und/oder Regeleinrichtung dazu ausgebildet sein, eine solche Entscheidung zu treffen und/oder mit einer Einrichtung gekoppelt sein, die eine solche Entscheidung trifft.

Die für den Nutzer wahrnehmbare Ladeperipherie ändert sich bei dem Wechsel nicht.

Um das Anschlusselement abhängig von einem Signal der Steuer- und/oder Regeleinrichtung wahlweise mit Gleichstrom oder mit Wechselstrom zu beaufschlagen, können beispielsweise entsprechende Schütze geschaltet werden.

Zum Beaufschlagen des Anschlusselements mit Gleichstrom kann ein Gleichstrom-Schütz so geschaltet werden, dass ein Stromfluss zum Anschlusselement erfolgen kann. Zum Beaufschlagen mit Wechselstrom kann ein Wechselstrom-Schütz geschaltet so geschaltet werden, dass ein Stromfluss zum Anschlusselement erfolgen kann.

Ebenso kann vorgesehen sein, dass keiner der beiden Schütz-Arten geschaltet wird, um gezielt bei entsprechenden Rahmenbedingungen, trotz angeschlossenem Fahrzeug, dieses nicht zu laden oder erst zu einem späteren Zeitpunkt zu laden. Dies ist vorteilhaft, wenn bevorzugt mit Gleichstrom geladen werden soll, jedoch die Gleichstromquelle nicht oder nicht ausreichend liefern kann, oder das Laden des betreffenden Fahrzeugs zu einem späteren Zeitpunkt erfolgen soll, weil es in geringerem Maße beim Ladevorgang priorisiert ist als andere. Auch hier erfolgt vorteilhaft demnach die Entscheidung, ob geladen oder nicht geladen wird, nicht im angeschlossenen Elektrofahrzeug, sondern seitens des lokalen Ladenetzes, beispielsweise in dem wenigstens einen Ladesystem.

Die Stromversorgung stellt die Ladeenergie zum Laden der Elektrofahrzeuge bereit. Die Stromversorgung kann eine oder mehrere Gleichstromversorgungsquellen und eine oder mehrere Wechselstromversorgungsquellen umfassen. Die eine oder mehreren Gleichstromversorgungsquellen umfassen vorteilhaft wenigstens eine Photovoltaikanlage. Die eine oder mehreren Wechselstromversorgungsquellen umfassen vorteilhaft wenigstens eine Netzversorgung.

Das lokale Ladenetz kann besonders vorteilhaft in Bereichen eingesetzt werden, bei denen Fahrzeuge regelmäßig über Stunden ungenutzt abgestellt sind, insbesondere auf einem Betriebsgelände. So ist während der Aufenthaltszeit des Nutzers auf dem Betriebsgelände einerseits ausreichend Zeit zum Aufladen des Elektrofahrzeugs, ohne eine Schnellladetechnik anwenden zu müssen.

Dies schont die Batterie im Elektrofahrzeug und kann deren Lebensdauer deutlich verlängern. Zum anderen kann auch bei wechselnden Wetterverhältnissen während der Ladephase gewährleistet werden, dass ausreichend Energie zum Laden des Elektrofahrzeugs bereitsteht. Es ist nicht erforderlich, dass der Nutzer den Ladevorgang überwacht und zwischen verschiedenen Stromquellen umschaltet oder eine Ladeverbindung zwischen verschiedenen Ladeanschlüssen umsteckt.

Die Ladesysteme des Ladenetzes können einzeln zugeschaltet oder abgeschaltet werden. Optional kann auch eine stufenweise Zuschaltung oder Abschaltung von einzelnen Ladesystemen erfolgen.

Mit besonderem Vorteil kann zumindest der Gleichstrom vor Ort erzeugt werden, beispielsweise mit einer Photovoltaikanlage. Der erzeugte Gleichstrom kann auch vor Ort verbraucht werden. Ein Rückspeisen von Gleichstrom, insbesondere von Photovoltaikstrom, in ein vorhandenes Versorgungsnetz ist nicht erforderlich. Überschüssiger Gleichstrom kann in einem Zwischenspeicher gespeichert werden und/oder vor Ort zur Versorgung von anderen elektrischen Verbrauchern eingesetzt werden, etwa zur Warmwasserbereitung und dergleichen.

Vorteilhaft kann ein Lademanagement das Laden einer Mehrzahl von zu ladenden Elektrofahrzeugen steuern. Die Nutzer sind üblicherweise, beispielsweise in einem Betriebsgelände, regelmäßige Nutzer mit überwiegend vorhersehbaren Anwesenheitszeiten und somit vorhersehbarem Nutzungsverhalten hinsichtlich des Elektrofahrzeugs. Auf diese Weise kann über eine Vielzahl von Elektrofahrzeugen deren Bedarf über längere Zeiträume relativ zuverlässig abgeschätzt werden und bei der kurzfristigen, beispielsweise tagesweisen, und mittelfristigen Planung des Bedarfs, beispielsweise während einer Arbeitswoche, und der zur Verfügung stehenden oder voraussichtlich zur Verfügung stehenden Ladestrommenge berücksichtigt werden. Vorteilhaft können Wetterprognosen und ähnliche Bedingungen, die für die Gleichstromerzeugung wesentlich sind, mit berücksichtigt werden. Ebenso können Wochentage, Urlaubszeiten der Nutzer und dergleichen mit berücksichtigt werden.

Ferner ist es möglich, eine Gruppe von Elektrofahrzeugen sowohl mit Gleichstrom als auch mit Wechselstrom zu laden, während eine andere Gruppe von Elektrofahrzeugen nur mit Gleichstrom geladen wird.

Hierzu stehen im Ladenetz dementsprechend zwei verschiedene Arten von Ladesystemen zur Verfügung. Optional kann auch vorgesehen sein, eine Gruppe von Elektrofahrzeugen nur mit Wechselstrom, insbesondere aus einem Versorgungsnetz, zu laden. Dabei kann die Einteilung, mit welcher Stromquelle geladen wird, auch von einer Priorisierung eines zu ladenden Elektrofahrzeugs, abhängig gemacht werden

Nach einer günstigen Ausgestaltung der Erfindung kann die Steuer- und/oder Regeleinrichtung mit einer Schaltvorrichtung gekoppelt sein, die abhängig von vorgegebenen Bedingungen einen Abgabezustand der wenigstens einen Ladevorrichtung zwischen einer Abgabe von Gleichstrom und einer Abgabe von Wechselstrom umschaltet. Dies kann automatisch erfolgen, ohne dass ein Nutzer eingreifen muss.
So kann von Gleichstrom auf Wechselstrom umgeschaltet werden, wenn der Stromertrag der Gleichstromquelle unter einen festgelegten Schwellwert sinkt. So können bei einem Ladesystem mit mehreren Ladestationen zur Anpassung einer elektrischen Bedarfsleistung an die elektrische Erzeugungsleistung stufenweise Ladestationen von der Gleichstromversorgung auf eine Wechselstromversorgung umgeschaltet werden. Weist eine Ladestation mehrere Ladeanschüsse auf, kann ebenso ein stufenweises Umschalten der einzelnen Ladeanschlüsse der Ladestation von Gleichstromversorgung auf Wechselstromversorgung erfolgen. Somit ist ein lokales Lademanagement möglich, das eine schwankende Stromversorgung einer Photovoltaikanlage mit Hilfe einer Netzversorgung ausgleichen kann.

Die Schaltvorrichtung kann mit erforderlichen Sicherheitseinrichtungen gekoppelt sein, die eine Betriebssicherheit der Ladestation gewährleisten. Eine Art von Sicherheitseinrichtung kann das Abschalten der Ladestation bei unsicherem Anlagenzustand bewirken. Zum einen kann die Ladestation und/oder das Ladesystem vor Schäden geschützt werden. Zum anderen werden Nutzer vor Fehlbedienung und körperlichen Gefahren geschützt.

Nach einer günstigen Ausgestaltung der Erfindung kann die Steuer- und/oder Regeleinrichtung mit einer Messeinrichtung gekoppelt sein, die zur Erfassung eines Energieertrags von wenigstens einer Gleichstromquelle vorgesehen ist, welche den Gleichstrom zum Laden bereitstellt. Vorteilhaft kann die Steuer- und/oder Regeleinrichtung Daten der Messeinrichtung verarbeiten.

Die Messeinrichtung kann zweckmäßigerweise den Energieeintrag der lokalen Gleichstromquelle ermitteln. Ebenso kann die Messeinrichtung den Energieverbrauch der verschiedenen Ladestationen erfassen. Die Steuer- und/oder Regeleinrichtung kann dafür sorgen, dass die einzelnen Ladestationen und/oder Ladeanschlüsse an einzelnen Ladestationen angeschlossene Elektrofahrzeuge bis zu einem gewünschten Zeitpunkt mit einer gewünschten Menge an elektrischer Energie versorgen können.

Ferner kann die Steuer- und/oder Regeleinrichtung dafür sorgen, dass die preisgünstigere elektrische Quelle bevorzugt zum Laden der Elektrofahrzeuge verwendet wird.

Nach einer günstigen Ausgestaltung der Erfindung kann die Steuer- und/oder Regeleinrichtung mit einer oder mehreren Kommunikationseinheiten gekoppelt sein, welches direkt oder indirekt Daten zur Umschaltung zwischen Gleichstrom und Wechselstrom an die Steuer- und/oder Regeleinrichtung übermittelt. Die mindestens eine Kommunikationseinheit kann dazu verwendet werden, externe Informationen wie Prognosen zur Stromerzeugung mit Photovoltaik sowie andere externe Faktoren als Eingabedaten in die Steuerung zur Wahl der Art der Energieversorgung bereitzustellen.

Nach einer günstigen Ausgestaltung der Erfindung kann die Steuer- und/oder Regeleinrichtung dazu eingerichtet sein, ein Rückspeisen von Strom aus einem angeschlossenen Elektrofahrzeug zu ermöglichen, der auf ein oder mehrere angeschlossene Elektrofahrzeuge innerhalb des Ladesystems verteilbar ist. Vorteilhaft können so Elektrofahrzeuge innerhalb der lokalen Ladeinfrastruktur geladen werden, etwa bei einem kurzfristigen Bedarf dieser Fahrzeuge oder zum Optimieren des Lademanagements unter den vorhandenen Elektrofahrzeugen.

Nach einer günstigen Ausgestaltung der Erfindung können eine oder mehrere DC-Ladevorrichtungen vorgesehen sein, welche nur zum Laden mit Gleichstrom ausgebildet ist. Ein Ladekabel kann fest an einer Ladestation installiert sein, oder alternativ kann eine Steckmöglichkeit zum lösbaren Stecken eines Ladekabels vorgesehen sein.

Nach einer günstigen Ausgestaltung der Erfindung kann ein Zwischenspeicher vorgesehen sein, um überschüssige Energie zwischenzuspeichern. Vorteilhaft kann der Zwischenspeicher eingesetzt werden, um eine zeitliche Differenz zwischen Erzeugung und Bedarf an elektrischer Energie auszugleichen. Wird zu viel elektrische Energie erzeugt, füllt sich der Zwischenspeicher. Wird zu wenig elektrische Energie erzeugt, leert sich der Zwischenspeicher.

Nach einer günstigen Ausgestaltung der Erfindung kann eine Authentifizierungsvorrichtung zum Authentifizieren eines zu ladenden Elektrofahrzeugs vorgesehen sein. Dies erlaubt eine Identifizierung des Nutzers und auch eine Definition von Berechtigungen zur Benutzung des Ladesystems. Ferner kann damit eine Priorisierung der Nutzer bzw. der Fahrzeuge derselben beim Laden vorgegeben werden.
Ebenso kann damit vorgegeben werden, ob ein Fahrzeug nur mit Gleichstrom, nur mit Wechselstrom oder mit einer Mischung von Gleichstrom und Wechselstrom geladen werden soll.

Nach einer günstigen Ausgestaltung der Erfindung kann eine lokale Stromquelle zur Erzeugung des Gleichstroms vorgesehen sein, insbesondere eine Photovoltaikanlage. Diese kann vorteilhaft großflächig auf einem Hallendach oder dergleichen montiert sein.

Nach einer günstigen Ausgestaltung der Erfindung kann die Kommunikationseinheit vorgesehen sein, um eine aktuelle verfügbare Ladeenergiemenge zu kommunizieren und/oder eine prognostizierte verfügbare Ladeenergiemenge zu kommunizieren.

Nach einer günstigen Ausgestaltung der Erfindung können mehrere Ladestationen und/oder mehrere Ladevorrichtungen in Reihe angeordnet und elektrisch parallel an einen Versorgungsbus angeschlossen sein.

Nach einem weiteren Aspekt der Erfindung wird ein Ladesystem mit wenigstens einer Ladestation zum Laden von Elektrofahrzeugen mit Wechselstrom und mit Gleichstrom vorgeschlagen, umfassend wenigstens eine Ladevorrichtung für ein Elektrofahrzeug, wobei eine Steuer- und/oder Regeleinrichtung mit der wenigstens einen Ladevorrichtung gekoppelt ist, um eine Stromabgabe an der Ladevorrichtung zu beeinflussen, wobei die wenigstens eine Ladevorrichtung wenigstens ein Anschlusselement umfasst, welches sowohl einen Bereich zum Beaufschlagen mit Gleichstrom als auch einen Bereich zum Beaufschlagen mit Wechselstrom aufweist, wobei das Anschlusselement abhängig von einem Signal der Steuer- und/oder Regeleinrichtung wahlweise mit Gleichstrom oder mit Wechselstrom beaufschlagbar ist.

Vorteilhaft kann während des Ladens die Stromversorgung der Ladevorrichtung von Wechselstrom auf Gleichstrom und umgekehrt umgestellt werden, ohne dass ein Nutzer die Ladevorrichtung wechseln muss. Die Ladestation kann Bestandteil eines Ladesystems mit mehreren Ladestationen sein. Die Ladestation kann auch eine Einzelstation sein. In beiden Fällen können an der Ladestation ein oder mehrere Ladevorrichtungen vorgesehen sein.

Vorteilhaft erfolgt die Entscheidung, ob mit Wechselstrom oder Gleichstrom geladen wird, oder ob geladen oder nicht geladen wird, nicht im angeschlossenen Elektrofahrzeug, sondern seitens des lokalen Ladenetzes, beispielsweise in dem Ladesystem. Zweckmäßigerweise kann die Steuer- und/oder Regeleinrichtung dazu ausgebildet sein, eine solche Entscheidung zu treffen und/oder mit einer Einrichtung gekoppelt sein, die eine solche Entscheidung trifft.

Dem Ladesystem können mehrere Ladestationen zugeordnet sein, welche sich eine oder mehrere Komponenten des Ladesystems teilen, beispielsweise Stromversorgung, Zwischenspeicher, und/oder Steuer- und/oder Regeleinrichtung.

Alternativ kann die wenigstens eine Ladestation die Steuer- und/oder Regeleinrichtung enthalten. Ferner kann die Ladestation eine Schaltvorrichtung enthalten, die mit der Steuer- und/oder Regeleinrichtung gekoppelt ist und die dazu dient, zwischen einer Abgabe von Gleichstrom und einer Abgabe von Wechselstrom umzuschalten. Ferner kann die Ladestation eine Messeinrichtung enthalten, die mit der Steuer- und/oder Regeleinrichtung gekoppelt ist und die zur Erfassung eines Energieertrags von wenigstens einer Gleichstromquelle vorgesehen ist, welche den Gleichstrom zum Laden bereitstellt. Ferner kann die Ladestation eine oder mehrere Kommunikationseinheiten enthalten, die mit der Steuer- und/oder Regeleinrichtung gekoppelt sind und die dazu dienen, direkt oder indirekt Daten zur Umschaltung zwischen Gleichstrom und Wechselstrom an die Steuer- und/oder Regeleinrichtung zu übermitteln. Die Ladestation kann dazu ausgebildet sein, ein Rückspeisen von Strom aus einem angeschlossenen Elektrofahrzeug zu ermöglichen. Ferner kann die Ladestation eine DC-Ladevorrichtung aufweisen, die nur das Laden mit Gleichstrom ermöglicht.

Nach einer günstigen Ausgestaltung der Erfindung kann eine lokale Stromquelle zum Erzeugen des Gleichstroms vorgesehen sein, insbesondere eine Photovoltaikanlage. Eine lokale Stromerzeugung ist preiswert und mit wenig Infrastrukturbedarf zu installieren.

Nach einer günstigen Ausgestaltung der Erfindung kann wenigstens eine Ladestation oder wenigstens eine Ladevorrichtung vorgesehen sein, welcher ausschließlich zum Laden mit Gleichstrom ausgebildet ist. Hierdurch ist es möglich, verschiedene Nutzergruppen mit unterschiedlichen Ladeprogrammen zu bedienen.

Nach einem weiteren Aspekt der Erfindung wird ein Verfahren zum Betreiben eines Ladesystems mit wenigstens einer Ladestation vorgeschlagen, bei dem wenigstens eine Ladevorrichtung zum Laden eines Elektrofahrzeugs wahlweise mit Gleichstrom oder Wechselstrom beaufschlagbar ist, wobei ein Umschalten zwischen Gleichstrom und Wechselstrom abhängig von vorgebbaren Parametern des Ladesystems und/oder des Elektrofahrzeugs erfolgt.

So kann das Laden mit Gleichstrom und/oder Wechselstrom durch ein lokales Lademanagement beeinflusst werden. Dadurch kann gezielt bei entsprechenden Rahmenbedingungen, trotz angeschlossenem Elektrofahrzeug, dieses nicht geladen oder erst zu einem späteren Zeitpunkt geladen werden, wenn andere Fahrzeuge priorisiert geladen werden sollen und/oder die gewünscht Stromart zum Laden nicht zur Verfügung steht. Soll bevorzugt oder ausschließlich mit Gleichstrom geladen werden, kann abhängig von einer Prognose über die Verfügbarkeit des Gleichstroms zum Ladezeitpunkt oder innerhalb der Ladedauer ein Ladebeginn verzögert werden oder ein Laden ganz ausbleiben.
So kann bei einer Photovoltaikanlage als Stromquelle eine Wetterprognose berücksichtigt werden. Ist der Himmel aktuell bewölkt und das Gleichstromangebot daher gering, und sagt die Prognose jedoch vorher, dass zu einem späteren Zeitpunkt mit Sonnenschein und daher mit einer starken Gleichstromerzeugung zu rechnen ist, kann das Laden des betreffenden Elektrofahrzeugs zu einem späteren Zeitpunkt erfolgen. Bei Bedarf kann vom lokalen Lademanagement für das betreffende Elektrofahrzeug und/oder die betreffende Ladestation berücksichtigt werden, ob zusätzlich oder alternativ ein Laden mit Wechselstrom erfolgen soll.

Vorteilhaft kann ein Laden von Elektrofahrzeugen an die verfügbare Ladeenergiemenge angepasst werden und schwankende Ladeenergie aus stark fluktuierenden Gleichstromquellen durch Ladeenergie aus verfügbaren Wechselstromquellen, insbesondere Versorgungsnetzen, ausgeglichen werden.

Nach einer günstigen Ausgestaltung der Erfindung kann ein Umschalten zu einer Ausgabe an der Ladevorrichtung von Wechselstrom unterbleiben, wenn bei einem Umschalten zu erwarten ist, dass ein vorgegebener Maximalwert einer für das Ladenetz verfügbaren elektrischen Leistung überschritten wird. Vorteilhaft kann eine Überlastung des Wechselstromnetzes vermieden werden.

Beispielsweise kann der Maximalwert eine zu erreichende Spitzenlast des Wechselstromanschlusses eines Betriebsgeländes darstellen. Bewegt sich die Last des gesamten Betriebes inklusive der Last für die Ladeinfrastruktur an dessen Grenzen, so greift ein Lastmanagementsystem ein, das die Ladeinfrastruktur ganz oder teilweise vom Wechselstromanschluss trennt. Dies hat den Vorteil, dass der Anschluss nicht überlastet wird. Ein anderer Vorteil ist, dass die Kosten für die Spitzenlast optimiert werden können. Ferner kann vorhandene Infrastruktur der Netzstromversorgung genutzt werden. Weiterhin kann sichergestellt werden, dass Anlagen, Geräte und Maschinen des Betriebs vorrangig mit elektrischer Leistung versorgt werden.

Nach einer günstigen Ausgestaltung der Erfindung kann ein Umschalten zu einer Ausgabe an der Ladevorrichtung von Wechselstrom automatisch erfolgen, wenn ein vorgegebener Minimalwert des Gleichstroms unterschritten wird.

Nach einer günstigen Ausgestaltung der Erfindung kann ein Umschalten zwischen einer Ausgabe an der Ladevorrichtung von Gleichstrom und einer Ausgabe von Wechselstrom erfolgen abhängig von einer Prognose einer voraussichtlich verfügbaren Energiemenge und/oder einer Prognose einer voraussichtlich benötigten Energiemenge und/oder einer Tageszeit und /oder eines Wochentags und/oder einer Jahreszeit und/oder einer Priorisierung eines zu ladenden Elektrofahrzeugs. Damit ist ein Lademanagement möglich, mit dem regenerativ erzeugter Strom lokal genutzt werden kann und das Netz der Netzversorgung gerade in Spitzenzeiten der Stromerzeugung beispielsweise lokal vorhandene Photovoltaikanlagen entlastet.

Gemäß einer günstigen Ausgestaltung der Erfindung kann ein Umschalten und Abschalten einer oder mehrerer im Ladenetz integrierten Ladestationen unter Berücksichtigung einer Priorisierung der Ladestation und/oder des Nutzers erfolgen. Dadurch kann erreicht werden, dass eine oder mehrere Ladestationen in gewissen Situationen gezielt gar nicht mit Strom beaufschlagt werden.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Fig. 1: schematisch ein Ladesystem mit einer Ladestation nach einem Ausführungsbeispiel der Erfindung mit einer Messeinrichtung, die mit einer Steuer- und/oder Regeleinrichtung gekoppelt ist;
- Fig. 2: schematisch ein Ladesystem mit einer Ladestation nach einem Ausführungsbeispiel der Erfindung mit einer Kommunikationseinheit, die mit einer Messeinheit und einer Steuer- und/oder Regeleinrichtung gekoppelt ist;
- Fig. 3: schematisch ein Ladesystem mit einer Ladestation nach einem Ausführungsbeispiel der Erfindung, bei welcher eine Rückspeisung aus einem Elektrofahrzeug in eine Ladestation erfolgt;
- Fig. 4: schematisch ein Ladesystem mit einer Ladestation nach einem Ausführungsbeispiel der Erfindung mit einem Zwischenspeicher;
- Fig. 5: schematisch eine Pinbelegung bei einem Anschlusselement einer Ladevorrichtung nach einem Ausführungsbeispiel der Erfindung;
- Fig. 6: als Blockschaltbild ein lokales Ladenetz mit einem Ladesystem mit mehreren Ladestationen, bei denen zwischen Laden mit Gleichstromladen und Laden mit Wechselstrom umgeschaltet werden kann, sowie mit reinen Ladestationen nach einem Ausführungsbeispiel der Erfindung;
- Fig. 7: ein Detail des Ladenetzes aus Figur 6, mit einer Umschaltung zwischen Laden mit Gleichstromladen und Laden mit Wechselstrom;
- Fig. 8: ein Detail des Ladenetzes aus Figur 6, mit reinen DC-Ladestationen und Ladevorrichtungen;
- Fig. 9: ein Blockschaltbild einer Ladestation des Ladesystems aus Figur 6, bei der zwischen Laden mit Gleichstromladen und Laden mit Wechselstrom umgeschaltet werden kann.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen. Die dargestellten Komponenten und Elemente, deren Auslegung und Verwendung können im Sinne der Überlegungen eines Fachmanns variieren und an die jeweiligen Anwendungen angepasst werden.

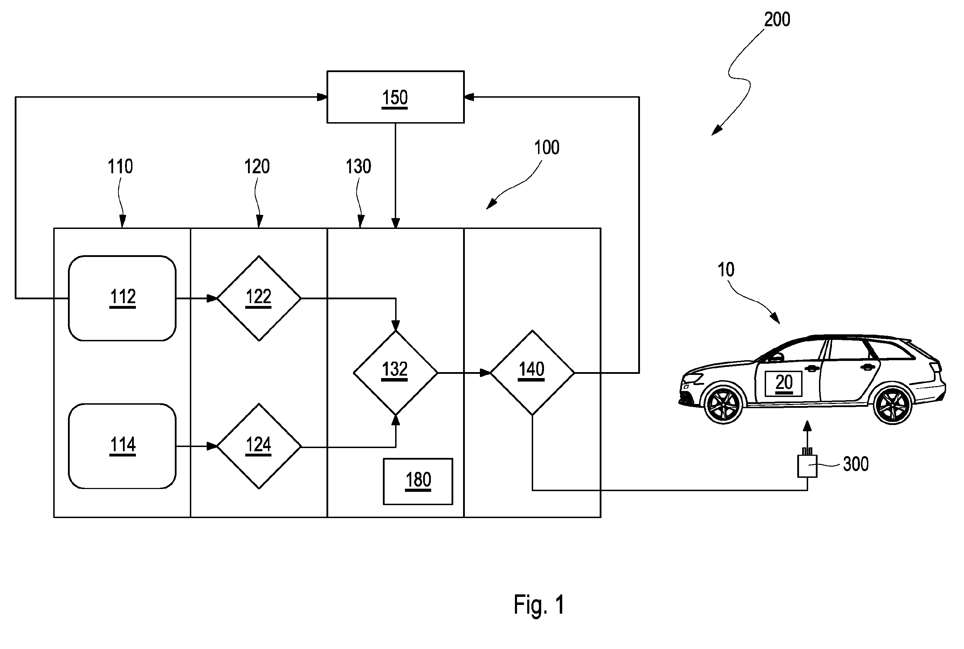

Figur 1 zeigt schematisch ein Ladesystem 200 zum Laden von Elektrofahrzeugen 10, mit einer Ladestation 100 nach einem Ausführungsbeispiel der Erfindung. Das Ladesystem 200 ist ein Inselsystem, das nicht auf eine Einspeisung von Gleichstrom in ein Versorgungsnetz angewiesen ist. Vorteilhaft ist das Ladesystem 200 einem Betriebsgelände zugeordnet, bei dem üblicherweise Fahrzeuge von Nutzern regelmäßig und über mehrere Stunden abgestellt sind. Denkbar ist neben einem Betriebsgelände, bei dem Arbeitnehmer ihre Fahrzeuge während ihrer Arbeitszeit parken, auch ein Pendlerparkplatz, bei dem auswärtige Autofahrer ihre Fahrzeuge parken und dann mit öffentlichen Verkehrsmitteln zu ihrem Bestimmungsort reisen, oder dergleichen. Die Regelmäßigkeit der Anwesenheit und das Parken über mehrere Stunden erlaubt durch einen relativ zuverlässig vorhersagbaren Ladeenergiebedarf ein besonders günstiges Lademanagement einer Vielzahl von Elektrofahrzeugen 10.

Das Ladesystem 200 umfasst wenigstens eine Stromversorgung 110. Diese weist mindestens eine Gleichspannungsquelle 112 und mindestens eine Wechselspannungsquelle 114 auf. Die Gleichstromquelle 112 ist beispielsweise eine lokal angeordnete Photovoltaikanlage auf dem Betriebsgelände. Die Wechselstromquelle 114 ist beispielsweise eine Netzversorgung, die im Betriebsgelände verfügbar ist.

Das Ladesystem 200 weist eine Messeinrichtung 150 auf, die mit einer Steuer- und/oder Regeleinrichtung 130 gekoppelt ist und dieser Daten übermittelt. Zwischen Stromversorgung 110 und der Steuer- und/oder Regeleinrichtung 130 sind zweckmäßigerweise eine Sicherheitseinrichtung 120 angeordnet, mit einer Sicherheitsvorrichtung 122 für den Gleichstromkreis und einer Sicherheitsvorrichtung 124 für den Wechselstromkreis. Die Sicherheitseinrichtung 120 gewährleistet die elektrische Betriebssicherheit der Ladestation 100 und des Ladesystems 200. Bei einem Fehlerzustand oder einer Fehlbedienung kann die Ladestation 100 und/oder das Ladesystem 200 abgeschaltet werden.

Ferner ist eine Ladevorrichtung 140 vorgesehen, mit der ein angeschlossenes Elektrofahrzeug 10 aufgeladen werden kann. Die Ladevorrichtung 140 erhält Gleichstrom oder Wechselstrom zum Laden des Elektrofahrzeugs 10, wobei in der Steuereinheit 130 eine Schaltvorrichtung 132, beispielsweise ein CT-Schütz, vorgesehen ist, mit dem zwischen einer Versorgung aus der Gleichstromquelle 112 und der Wechselstromquelle 114 umgeschaltet werden kann, so dass jeweils nur eine der Stromquellen 112, 114 der Stromversorgung 110 mit der Ladevorrichtung 140 verbunden ist.

Ferner ist eine Authentifizierungsvorrichtung 20, 180 vorgesehen, mit dem ein Nutzer unter anderem seine Berechtigung zum Laden des Elektrofahrzeugs 10 nachweisen kann. Dabei ist ein Teil der Authentifizierungsvorrichtung 20 dem Elektrofahrzeug 10 oder seinem Nutzer zugeordnet und ein Teil der Authentifizierungsvorrichtung 180 dem Ladesystem 200 oder der Ladestation 100.

Die Messeinrichtung 150 erhält aus der Stromversorgung 110 Daten der Gleichstromquelle 112 über die verfügbare Ladeenergie sowie Daten aus der Ladevorrichtung 140 über den vorliegenden Ladeenergiebedarf des Elektrofahrzeugs 10.

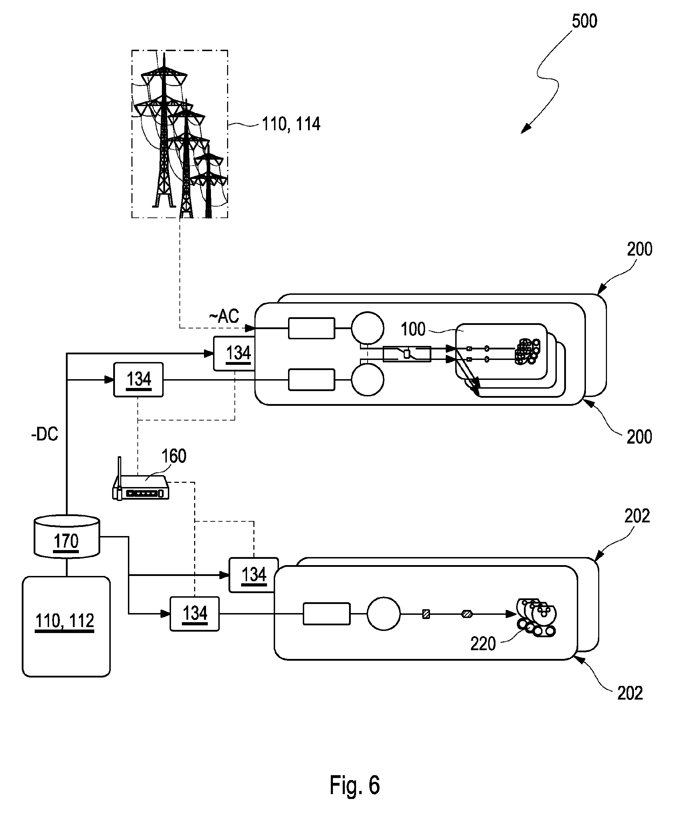

Die Ladevorrichtung 140 umfasst eine Buchse oder ein Stecker, welche Buchse oder welcher Stecker sowohl eine elektrische Kontakte für Gleichstrom zum Laden mit Gleichstrom als auch eine Pinbelegung für Wechselstrom zum Laden mit Wechselstrom aufweist. Die Schaltvorrichtung 132 schaltet eine Verbindung zwischen den Stromquellen 112, 114 zur Ladeeinrichtung 140 abhängig von einem Signal der Steuer- und/oder Regeleinrichtung 130 zur wahlweisen Abgabe von Gleichstrom oder Wechselstrom frei. Vorteilhaft erfolgt die Entscheidung, ob mit Wechselstrom oder Gleichstrom geladen wird, oder ob geladen oder nicht geladen wird, nicht im angeschlossenen Elektrofahrzeug 10, sondern seitens eines lokalen Ladenetzes 500 (Figur 6), beispielsweise in dem dem Ladenetz 500 (Figur 6) zugehörigen Ladesystem 200. Zweckmäßigerweise kann die Steuer- und/oder Regeleinrichtung 130 dazu ausgebildet sein, eine solche Entscheidung zu treffen und/oder mit einer Einrichtung gekoppelt sein, die eine solche Entscheidung trifft.

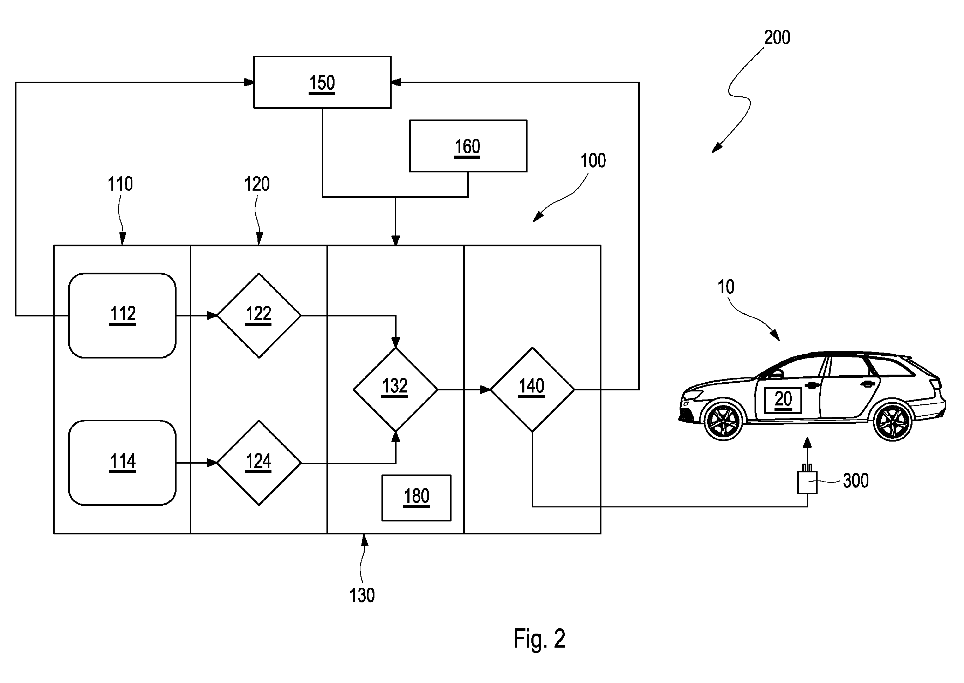

Figur 2 zeigt schematisch ein Ladesystem 200 mit einer Ladestation 10 nach einem Ausführungsbeispiel der Erfindung mit einer Kommunikationseinheit 160, die mit einer Steuer- und/oder Regeleinrichtung 130 gekoppelt ist. Der Aufbau des Ladesystems 200 entspricht im Übrigen dem Aufbau des Ladesystems 200 aus Figur 1, auf die zur Vermeidung unnötiger Wiederholungen zur Beschreibung der entsprechenden Elemente des Ladesystems 200 verwiesen wird.

Die Kommunikationseinheit 160 wird dazu eingesetzt, externe Informationen, wie beispielsweise Prognosen zur Stromerzeugung der Gleichstromquelle 112 sowie externe Faktoren, die als Eingabedaten in die Steuer- und/oder Regeleinrichtung 130 zur Steuerung zur Wahl der Stromquelle 112, 114 einfließen.

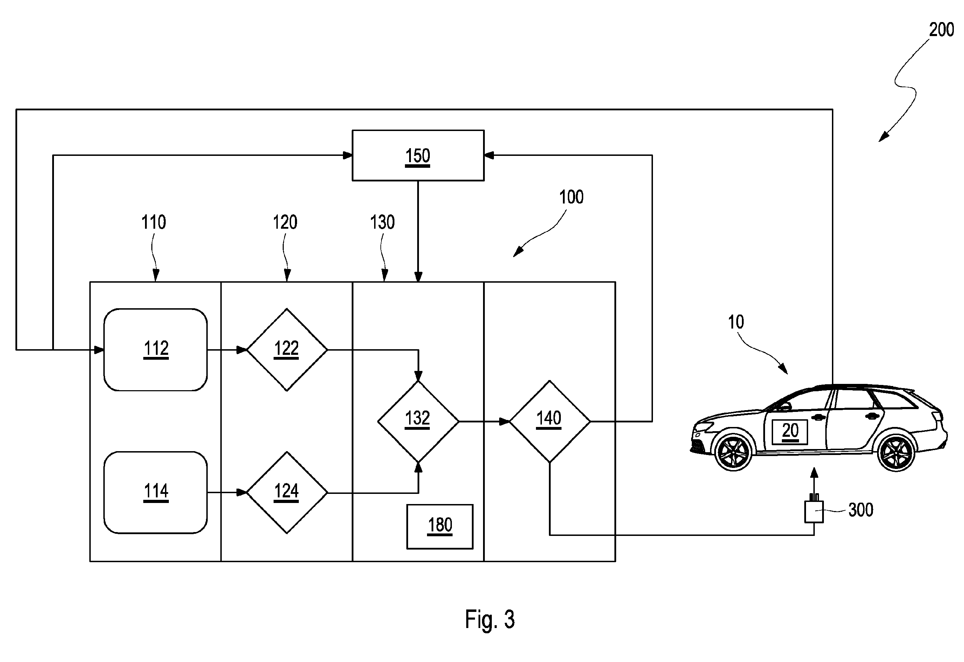

Figur 3 zeigt schematisch ein Ladesystem 200 mit einer Ladestation 100 nach einem Ausführungsbeispiel der Erfindung, bei welcher eine Rückspeisung aus einem Elektrofahrzeug 100 in eine Ladestation 100 erfolgt. Der Aufbau des Ladesystems 200 entspricht im Übrigen dem Aufbau des Ladesystems 200 aus Figur 1, auf die zur Vermeidung unnötiger Wiederholungen zur Beschreibung der entsprechenden Elemente des Ladesystems 200 verwiesen wird. In einer nicht dargestellten Weiterentwicklung kann ferner eine Kommunikationseinheit 160 wie in Figur 2 vorgesehen sein.

Eine Einspeisung von Strom aus dem Elektrofahrzeug 10 zurück in die Stromversorgung 110 das Ladesystem 200 ermöglicht es, dass ein Teil der in der Batterie des Elektrofahrzeugs 10 gespeicherten Energie verwendet werden kann, um andere Fahrzeuge innerhalb des Ladesystems 200 zu laden.

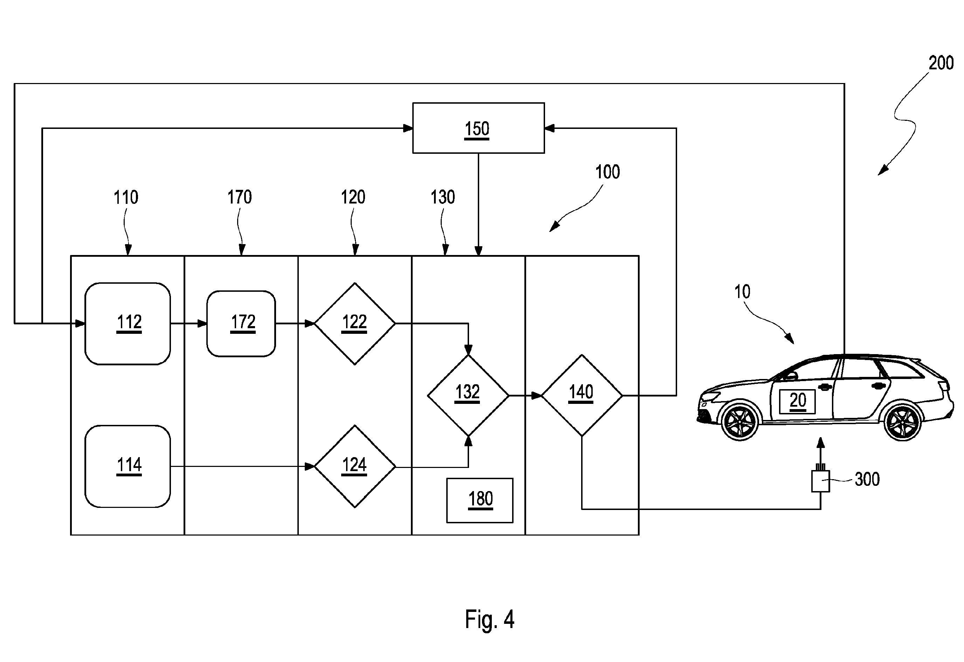

Figur 4 zeigt in schematischer Darstellung ein Ladesystem 200 mit einer Ladestation 100 nach einem Ausführungsbeispiel der Erfindung mit einem Zwischenspeicher 170, beispielsweise einer Batterie 172. Der Aufbau des Ladesystems 200 entspricht im Übrigen dem Aufbau des Ladesystems 200 aus Figur 1, auf die zur Vermeidung unnötiger Wiederholungen zur Beschreibung der entsprechenden Elemente des Ladesystems 200 verwiesen wird. In einer nicht dargestellten Weiterentwicklung kann ferner eine Kommunikationseinheit 160 wie in Figur 2 vorgesehen sein. Alternativ oder zusätzlich kann ferner in einer nicht dargestellten Weiterentwicklung eine Rückspeisung aus einem Elektrofahrzeug 10 in eine Ladestation 100 wie in Figur 3 erfolgen.

Mit dem Zwischenspeicher 170 kann überschüssige Energie aus der Gleichstromquelle 112 zwischengespeichert werden, um über die Zeit Differenzen zwischen Ladeenergieerzeugung und Ladeenergiebedarf auszugleichen.

Der Zwischenspeicher 170 kann mittels einer nicht dargestellten Kommunikationseinheit angesteuert werden, um Gleichstrom aufzunehmen, falls dieser nicht an an das Ladesystem 200 angeschlossene Elektrofahrzeuge 10 oder auch sonstige lokale DC-Verbraucher abgegeben werden kann. Ferner kann der Zwischenspeicher 170 Gleichstrom an die angeschlossenen Ladestationen 100 des Ladesystems 200 und/oder sonstige lokale DC-Verbraucher abgeben, falls dieser Zwischenspeicher 170 geladen ist und nicht alle angeschlossenen und im Gleichstrommodus befindlichen elektrischen Fahrzeuge/Verbraucher mit lokal erzeugtem Gleichstrom versorgt werden können.

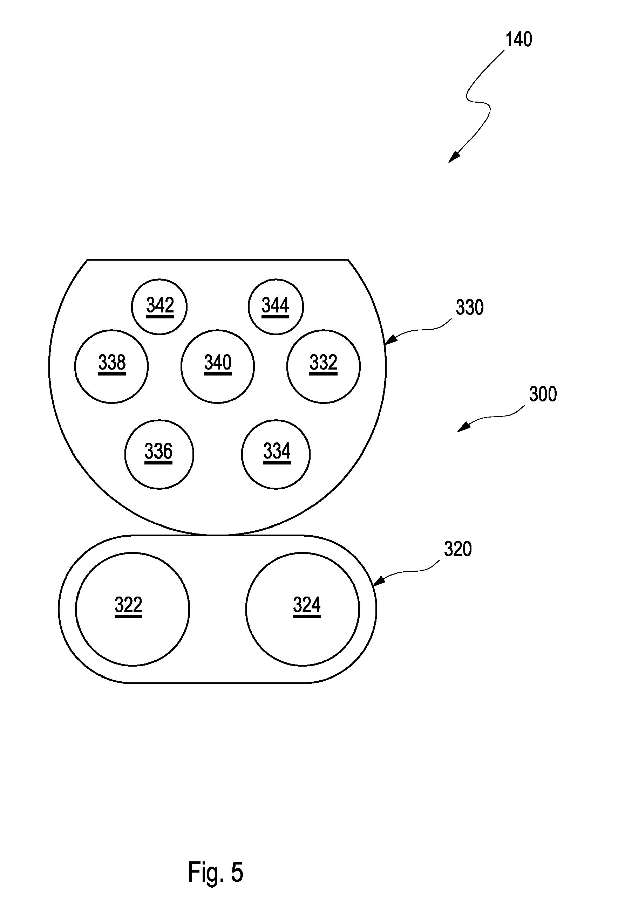

Figur 5 zeigt schematisch ein elektrisches Anschlusselement 300 einer Ladevorrichtung 140 in Form eines Steckers oder einer Buchse nach einem Ausführungsbeispiel der Erfindung. Das Anschlusselement 300 erlaubt in einem Bereich 320 das Übertragen von Gleichstrom über zwei Anschlüsse 322 und 324 (Pluspol und Minuspol) und in einem Bereich 330 das Übertragen von Wechselstrom mit drei Kontakten 332, 334, 336 für drei Phasen und einem Nullleiter 338. Ferner sind Anschlüsse 340, 342, 344 vorgesehen, wobei Anschluss 340 ein Erdungsanschluss ist, Anschluss 342 ein Steuerpilotanschluss und Anschluss 344 ein Näherungskontakt ist.

Es besteht die Wechselmöglichkeit zwischen Gleichstrom auf Wechselstrom. Es wird der obere Teil des Steckers mit dem öffentlichen Stromnetz (Wechselstrom) verbunden und der untere Teil mit der Gleichstromquelle (Gleichstrom). Die Anschlüsse 322, 324 und 340, 342, 344 entsprechen der Anordnung eines so genannten CCS-Steckers zum Laden von Elektrofahrzeugen mit Gleichstrom. Die Anschlüsse 332, 334, 336, 338 und 340, 342, 344 entsprechen der Anordnung eines so genannten Typ-2-Steckers zum Laden von Elektrofahrzeugen mit Wechselstrom. Vorteilhaft sind ein CCS-Stecker und ein Typ-2-Stecker als bauliche Einheit zum Anschlusselement 300 zusammengefasst. Die Belegung der Anschlüsse des Anschlusselements 300 entspricht IEC 62196.

Die vorstehend in den Figuren 1 bis 4 beschriebene Regel- und/oder Steuerungseinheit 130 verbindet über die Schaltvorrichtung 132 je nach Schaltstellung entweder die Anschlüsse 322, 324 zum DC-Laden mit der Gleichstromquelle oder die Anschüsse 332, 334, 336, 338 zum AC-Laden mit der Wechselstromquelle 114.

Durch eine elektromechanische Verriegelung kann verhindert werden, dass an den Anschlüssen des Anschlusselements 300 Gleichstrom und Wechselstrom zur gleichen Zeit anliegen.

Figur 6 zeigt als Blockschaltbild eines Ladenetzes 500 mit mehreren Ladesystemen 200, die jeweils mehrere Ladestationen 100 umfassen, bei denen wahlweise zwischen Laden (oder Einspeisen) mit Gleichstrom und Laden mit Wechselstrom umgeschaltet werden kann, sowie mit mehreren Ladesystemen 202 mit jeweils mehreren Ladestationen 220, an denen nur Gleichstrom entnommen oder gegebenenfalls eingespeist werden kann, nach einem Ausführungsbeispiel der Erfindung.

Die Ladesysteme 200, 202 können jeweils elektrisch in Reihe geschaltet sein. Optional sind jedoch bei Bedarf auch andere elektrische Verschaltungen denkbar.

Die Ladestationen 100 umfassen jeweils eine oder mehrere Ladevorrichtungen 140, die wahlweise Gleichstrom oder Wechselstrom abgeben, oder im Falle einer Rückspeisung aus einem angeschlossenen Elektrofahrzeug, aufnehmen können.

Eine lokale Stromquelle 112 einer Stromversorgung 110 des Ladenetzes 500, beispielsweise eine Photovoltaikanlage, ist zum Erzeugen des Gleichstroms im Ladenetz 500 vorgesehen, und kann insbesondere eine Photovoltaikanlage sein. Diese speist die Ladesysteme 200 und 202. Dies kann über einen als Batterie ausgebildeten Zwischenspeicher 170 erfolgen.

Bei einer Photovoltaikanlage können die Solarzellen vorteilhaft derart montiert sein, dass der Winkel der Zellenfläche abhängig vom jahreszeitlichen Winkel der Sonneneinstrahlung manuell verändert werden kann.

Als Wechselstromquelle 114 der Stromversorgung 110 des Ladenetzes 500 kann ein überörtliches öffentliches Versorgungsnetz eingesetzt werden.

Eine Internetseite oder eine App auf einem Mobiltelefon können berechtigten Nutzern anzeigen, wie die voraussichtliche Verfügbarkeit von Strom an in unterschiedlichen Ladesystemen 200, 202 in den Folgetagen vorrausichtlich sein wird, beispielsweise abhängig von einer prognostizierten Sonneneinstrahlung und der geplanten Schaltung der Ladesysteme 200, 202.

Der Zwischenspeicher 170 ist mittels einer Kommunikationseinheit 160 und einem geeigneten Aktor derart steuerbar, dass sie Gleichstrom aufnehmen kann, falls dieser nicht an Elektrofahrzeuge, welche an die Ladesysteme 200, 202 angeschlossen sind oder an sonstige lokale DC-Verbraucher, abgegeben werden kann. Ferner gibt der Zwischenspeicher 170 Gleichstrom an die angeschlossenen Ladesysteme 200, 202 bzw. DC- Verbraucher ab, falls der Zwischenspeicher 170 geladen ist und nicht alle angeschlossenen und im Gleichstromlademodus befindlichen Elektrofahrzeuge und/oder DC-Verbraucher mit lokal erzeugtem Gleichstrom versorgt werden können.

Jedes Ladesystem 200, 202 weist ein Freigabeelement 134 auf, mit dem das jeweilige Ladesystem 200, 202 bei Bedarf abgeschaltet oder zugeschaltet werden kann, so dass einzelne der Ladesysteme gezielt einzeln aktiviert oder deaktiviert werden können. Dies ist vorteilhaft, um bei einem Mangel an Gleichstrom nur ausgewählte Ladesysteme 200, 202 mit Gleichstrom zu bedienen.

Als Freigabeelement 134 kann ein Kommunikationsschalter eingesetzt werden, der mit der Kommunikationseinheit 160 gekoppelt ist, so dass die Ladesysteme 200, 202 einzeln zugeschaltet oder abgeschaltet werden können. Zur Kommunikation sind verschieden Techniken denkbar, etwa Funkrundsteuerung, DSL, UMTS und dergleichen.

Alternativ kann ein automatischer, lokal vorhandener Aktor als Freigabelelement 134 eingesetzt werden, beispielsweise bei einer Kleinsteuerung. Für derartige Aktoren können definierbare Schwellwerte hinterlegt werden. Der Aktor ist mit einem oder mehreren Sensoren ausgestattet, welche die Stromzufuhr abhängig von Messungen der Sensoren und der Erreichung des hinterlegten Schwellwerts regeln. Hierdurch ist ein stufenweises Zuschalten oder Abschalten der Ladesysteme 200, 202 möglich.

Im Falle des Ausfalls der Kommunikationseinheit 160 oder einzelner Kommunikationsverbindungen ist optional eine manuelle Zuschaltung der Ladesysteme 200, 202 über einen Schalter möglich.

Das Ladenetz 500 ermöglicht die Aufnahme von Gleichstrom aus angeschlossenen Elektrofahrzeugen, welche sich im "Rückspeisemodus" in das Ladenetz 500 befinden. Hierzu besitzt das Ladenetz 500 einen Umschalter (nicht dargestellt) zur Änderung der Stromflussrichtung und einen Signalempfänger zum Start der Umkehrung. Signale können über die Kommunikationseinheit 160 gegeben werden.

Vorteilhaft erfolgt die Entscheidung, ob mit Wechselstrom oder Gleichstrom geladen wird, oder ob geladen oder nicht geladen wird, nicht im angeschlossenen Elektrofahrzeug 10, sondern seitens des lokalen Ladenetzes 500, beispielsweise in dem Ladesystem 200, 202. Zweckmäßigerweise kann die Steuer- und/oder Regeleinrichtung des Ladesystems 200, 202 dazu ausgebildet sein, eine solche Entscheidung zu treffen und/oder mit einer Einrichtung gekoppelt sein, die eine solche Entscheidung trifft.

Vorteilhaft können übliche Sicherheitsvorrichtungen vorgesehen sein, etwa Fehlerstromschutzschalter und Leitungsschutzschalter. Strommesssysteme können ebenfalls im Ladenetz 500 vorgesehen sein.

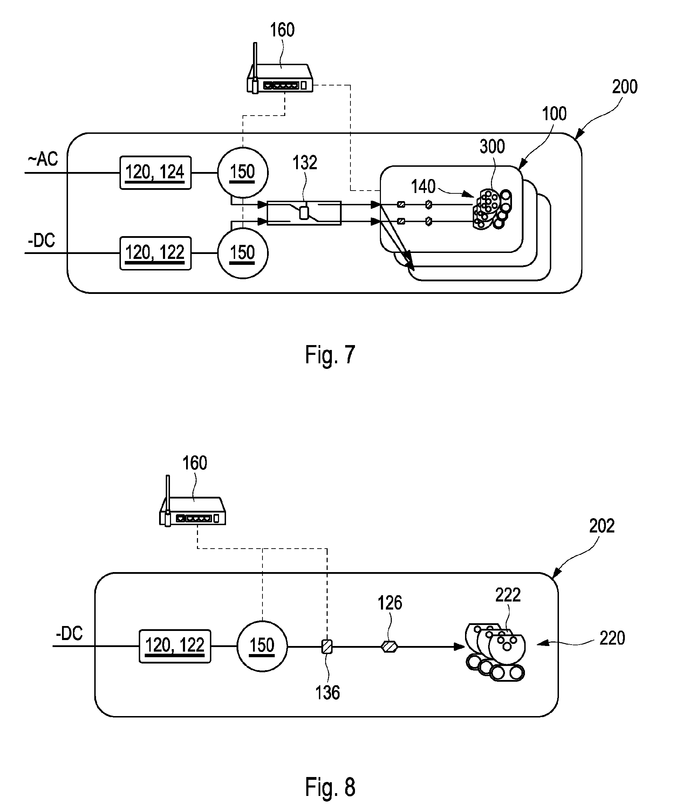

Figur 7 zeigt als Detail des Ladesystems 500 aus Figur 6 ein Ladesystem 200, das für einen Betrieb mit Gleichstrom und mit Wechselstrom vorgesehen ist, mit einer Umschaltung zwischen Laden mit Gleichstromladen und Laden mit Wechselstrom.

In dieser Ausgestaltung erfolgt vorzugsweise ein so genanntes "MUSS-Laden". Angeschlossene Fahrzeuge werden zunächst möglichst mit Gleichstrom geladen. Bleibt dieser aus, etwa wegen fehlendem Photovoltaik-Strom, wird mit Wechselstrom geladen. Trennt der Fahrer nach einiger Zeit das Fahrzeug vom Ladesystem 200, sollte es in jedem Fall aufgeladen sein (MUSS-Laden).

Das Ladesystem 200 umfasst wenigstens eine Ladestation 100 oder auch mehrere in Reihe angeordnete Ladestationen 100, die elektrisch parallel an einen Versorgungsbus angeschlossen sind und einzeln zugeschaltet oder abgeschaltet werden können.

Die Ladestationen 100 können bei Bedarf auch anders verschaltet sein.

Die Ladestationen 100 sind mit einer Schaltvorrichtung 132 verbunden, die vorzugsweise eine über die Kommunikationseinheit 160 fernsteuerbare elektromechanische Verriegelung oder einen Schalter als Aktor aufweist. Die Schaltvorrichtung 132 steuert die Versorgung des Anschlusselements 300 als Teil der Ladestation 100 zur Versorgung entweder mit Gleichstrom oder mit Wechselstrom. Die Kommunikation erfolgt über die Kommunikationseinheit 160 (z.B. DSL-Router) oder alternativ, wie in Figur 6 beschrieben, über einen automatischen lokalen Aktor (z.B. Kleinsteuerung). Im Falle eines Systemausfalls ist auch manueller Betrieb der Schaltvorrichtung 132 möglich.

Vorteilhaft können übliche Sicherheitsvorrichtungen 120 vorgesehen sein, etwa Fehlerstromschutz- und Leitungsschutzschalter122, 124. Strommesssysteme 150 können ebenfalls im Ladesystem 200 vorgesehen sein.

Das Strommesssystem 150 kann vorteilhaft fernauslesbar sein und eine Verbindung mit der Kommunikationseinheit 160 aufweisen. Günstig ist eine pulsweise Messung. Das Strommesssystem 150 kann zweckmäßigerweise eichrechtliche Anforderungen erfüllen. Von Vorteil ist es, eine Aufzeichnung der Messwerte vorzusehen sowie eine Signierung der Messwerte.

Figur 8 zeigt als Detail des Ladesystems 500 aus Figur 6 ein Ladesystem 202, das für einen Betrieb mit Gleichstrom vorgesehen ist und wenigstens eine Ladestation 220 mit einem DC-Ladestecker 222 aufweist. Sind mehrere Ladestationen 220 vorgesehen, können diese in Reihe angeordnet und elektrisch parallel an einen Versorgungsbus angeschlossen sein und einzeln zugeschaltet oder abgeschaltet werden.

Die Verschaltung kann bei Bedarf auch anders ausgeführt werden.

In dieser Ausgestaltung erfolgt vorzugsweise ein so genanntes "KANN-Laden". Angeschlossene Fahrzeuge werden möglichst mit Gleichstrom geladen. Bleibt dieser aus, etwa wegen fehlendem Photovoltaik-Strom, wird gar nicht geladen (KANN-Laden). Dies ist in einem Fall tolerierbar, wenn der Batterieladestand noch für die nächsten Fahrten ausreicht. Der Fahrer kann zu einem späteren Zeitpunkt mit dann wieder verfügbaren Gleichstrom laden. Sobald allerdings der Batterieladezustand tatsächlich zur Neige geht, wird das Fahrzeug zum "MUSS-Lader", und es erfolgt ein "MUSS-Laden" entsprechend Figur 7.

Ein Schütz 136 sorgt für die Gleichstromverbindung. Das Schütz 136 ist vorzugsweise fernsteuerbar. Dieses dient dem Start und Beenden des Ladevorgangs und stellt eine Kommunikation zwischen Ladestation 220 und Elektrofahrzeug her. Die Kommunikation erfolgt über eine Kommunikationseinheit 160.

Alternativ kann das Ladesystem 202, wie in Figur 6 beschrieben, über einen automatischen lokalen Aktor (z.B. Kleinsteuerung) aktiviert werden. Im Falle eines Systemausfalls ist auch manueller Betrieb der Schalteinrichtung möglich.

Sonstige technische Vorrichtungen zum Laden nach IEC 62196 (z.B. CP-Modul) können ebenfalls vorhanden sein.

Vorteilhaft erfüllt der DC-Ladestecker 222 den Standard Mode 4 nach IEC 62196. Ein Ladekabel (nicht dargestellt) ist zweckmäßigerweise fest installiert, oder alternativ ist eine Steckmöglichkeit zum losen Stecken eines Kabels vorhanden.

Vorteilhaft können übliche Sicherheitsvorrichtungen 120 vorgesehen sein, etwa Fehlerstromschutz- und Leitungsschutzschalter122, 124. Strommesssysteme 150 können ebenfalls im Ladesystem 200 vorgesehen sein.

Das Strommesssystem 150 kann vorteilhaft fernauslesbar sein und eine Verbindung mit der Kommunikationseinheit 160 aufweisen. Günstig ist eine pulsweise Messung. Das Strommesssystem 150 kann zweckmäßigerweise eichrechtliche Anforderungen erfüllen. Von Vorteil ist es, eine Aufzeichnung der Messwerte vorzusehen sowie eine Signierung der Messwerte.

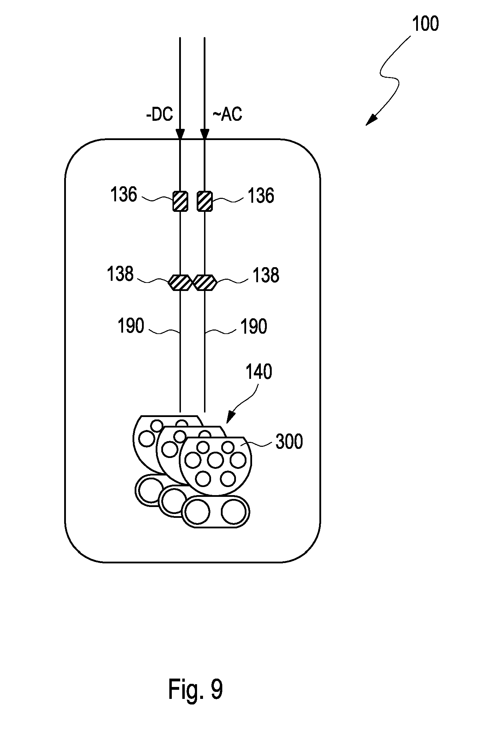

Figur 9 zeigt ein Blockschaltbild einer Ladestation 100 des Ladesystems 200 aus Figur 6, bei der zwischen Laden mit Gleichstromladen und Laden mit Wechselstrom umgeschaltet werden kann.

Die Ladestation 100 weist vorteilhaft als Ladevorrichtung 140 ein Anschlusselement 300 auf, das als Stecker ausgebildet ist, welcher an einem Ladekabel fest installiert ist, oder es ist alternativ eine Steckmöglichkeit zum losen Stecken eines Kabels einschließlich Stecker vorhanden.

Es sind zwei verbundene Kommunikations-Schütze 136 vorgesehen, eines für die Gleichstromverbindung und eines für die Wechselstromverbindung. Mit Hilfe der Schütze 136 ist ein Wechsel zwischen Gleichstrommodus und Wechselstrommodus möglich. Die Schütze 136 werden für die Kommunikation zwischen Ladestation 100 und Elektrofahrzeug benötigt. An den Signalkontakten des Anschlusselements 300 (Figur 5) liegt immer nur das Kommunikationssignal des aktuellen Lademodus an. Unmittelbar vor einem Wechsel zwischen Gleich- und Wechselstrom wird dem Fahrzeug mitgeteilt, dass der Ladevorgang beendet ist. Anschließend wird in den anderen Lademodus gewechselt und ein neuer Ladevorgang begonnen.

Im Falle Unterschreitung einer jeweils definierten Mindeststromstärke wird hierdurch ein geordneter Ladeabbruch durchgeführt. Sonstige technische Vorrichtungen 138 zum Laden nach IEC 62196 (z.B. CP-Modul) sind ebenfalls vorhanden. Vorteilhaft können übliche Sicherheitsvorrichtungen vorgesehen sein (nicht dargestellt), etwa Fehlerstromschutz- und Leitungsschutzschalter. Strommesssysteme können ebenfalls im Ladesystem 200 vorgesehen sein.

Das Strommesssystem kann vorteilhaft fernauslesbar sein und eine Verbindung mit der Kommunikationseinheit aufweisen. Günstig ist eine pulsweise Messung. Das Strommesssystem kann zweckmäßigerweise eichrechtliche Anforderungen erfüllen. Von Vorteil ist es, eine Aufzeichnung der Messwerte vorzusehen sowie eine Signierung der Messwerte.

Das Ladesystem 200 kann manuell oder mittels Kommunikationseinheit 160 auf "auto-AC-Laden" umgestellt werden. In diesem Fall wird die Wechselstrom-Ladung automatisch gestartet, falls ein vordefinierter Gleichstrom-Mindestwert unterschritten wird.

Es werden laufend Informationen über die Auslastung des Wechselstrom-Hausanschlusses, über den sowohl das Ladesystem 200 als auch diverse andere Verbrauchern im Hausnetz/oder Arealnetz ihren Wechselstrom beziehen, erhoben und mit der maximalen Anschlussleistung bzw. vordefinierten Maximalwerten abgeglichen. Diese Information wird verwendet, um zu verhindern, dass durch Schaltung des AC-Modus der Ladestation 100 ein definierter Wechselstrom-Maximalwert für das Hausnetz oder Arealnetz überschritten wird.

## Patentansprüche

1. Lokales Ladenetz (500) mit wenigstens einem Ladesystem (200) zum Laden von Elektrofahrzeugen (10), umfassend wenigstens eine Ladestation (100), wenigstens eine Stromversorgung (110), wenigstens eine Steuer- und/oder Regeleinrichtung (130), wobei die wenigstens eine Ladestation (100) wenigstens eine Ladevorrichtung (140) für ein Elektrofahrzeug (10) aufweist, wobei die wenigstens eine Ladestation (100) zur Ausgabe von Wechselstrom und Gleichstrom ausgebildet ist, wobei die Steuer- und/oder Regeleinrichtung (130) mit der wenigstens einen Ladevorrichtung (140) der Ladestation (100) gekoppelt ist, um eine Stromabgabe an der Ladevorrichtung (140) zu beeinflussen, **dadurch gekennzeichnet,**
**dass** die wenigstens eine Ladevorrichtung (140) wenigstens ein Anschlusselement (300) umfasst, welches sowohl einen Bereich (320) zum Beaufschlagen mit Gleichstrom als auch einen Bereich (330) zum Beaufschlagen mit Wechselstrom aufweist, wobei das Anschlusselement (300) abhängig von einem Signal der Steuer- und/oder Regeleinrichtung (130) wahlweise mit Gleichstrom oder mit Wechselstrom beaufschlagbar ist.

2. Ladenetz nach Anspruch 1, **dadurch gekennzeichnet, dass** die Steuer- und/oder Regeleinrichtung (130) mit einer Schaltvorrichtung (132) gekoppelt ist, die abhängig von vorgegebenen Bedingungen einen Abgabezustand der wenigstens einen Ladevorrichtung (140) zwischen einer Abgabe von Gleichstrom und einer Abgabe von Wechselstrom umschaltet.

3. Ladenetz nach Anspruch 1 oder 2, **dadurch gekennzeichnet, dass** die Steuer- und/oder Regeleinrichtung (130) mit einer Messeinrichtung (150) gekoppelt ist, die zur Erfassung eines Energieertrags von wenigstens einer Gleichstromquelle (112) vorgesehen ist, welche den Gleichstrom zum Laden bereitstellt.

4. Ladenetz nach einem der vorhergehenden Ansprüche, **dadurch gekennzeichnet, dass** die Steuer- und/oder Regeleinrichtung (130) mit einer oder mehreren Kommunikationseinheiten (160) gekoppelt ist, welche direkt oder indirekt Daten zur Umschaltung zwischen Gleichstrom und Wechselstrom an die Steuer- und/oder Regeleinrichtung (130) übermittelt.

5. Ladenetz nach einem der vorhergehenden Ansprüche, **dadurch gekennzeichnet, dass** die Steuer- und/oder Regeleinrichtung (130) dazu eingerichtet ist, ein Rückspeisen von Strom aus einem angeschlossenen Elektrofahrzeug (10) zu ermöglichen, der auf ein oder mehrere angeschlossene Elektrofahrzeuge (10) innerhalb des Ladesystems (200) verteilbar ist.

6. Ladenetz nach einem der vorhergehenden Ansprüche, **dadurch gekennzeichnet, dass** eine oder mehrere dc-Ladevorrichtungen (222) vorgesehen sind.

7. Ladenetz nach einem der vorhergehenden Ansprüche, **dadurch gekennzeichnet, dass** ein Zwischenspeicher (170) vorgesehen ist, um überschüssige Energie zwischenzuspeichern.

8. Ladenetz nach einem der vorhergehenden Ansprüche, **dadurch gekennzeichnet, dass** eine Authentifizierungsvorrichtung (20, 180) zum Authentifizieren eines zu ladenden Elektrofahrzeugs (10) vorgesehen ist.

9. Ladenetz nach einem der vorhergehenden Ansprüche, **dadurch gekennzeichnet, dass** eine lokale Stromquelle (112) zur Erzeugung des Gleichstroms vorgesehen ist, insbesondere eine Photovoltaikanlage.

10. Ladenetz nach einem der vorhergehenden Ansprüche, **dadurch gekennzeichnet, dass** die Kommunikationseinheit (160) vorgesehen ist, um eine aktuelle verfügbare Ladeenergiemenge zu kommunizieren und/oder eine prognostizierte verfügbare Ladeenergiemenge zu kommunizieren.

11. Ladenetz nach einem der vorhergehenden Ansprüche, **dadurch gekennzeichnet, dass** mehrere Ladestationen (100) und/oder mehrere Ladevorrichtungen (140) in Reihe angeordnet und elektrisch parallel an einen Versorgungsbus geschaltet oder schaltbar sind.

12. Ladesystem (200) mit wenigstens einer Ladestation (100) zum Laden von Elektrofahrzeugen (10) mit Wechselstrom und mit Gleichstrom, umfassend wenigstens einen Ladeanschluss (300) für ein Elektrofahrzeug (10), wobei eine Steuer- und/oder Regeleinrichtung (130) mit der wenigstens einen Ladevorrichtung (140) gekoppelt ist, um eine Stromabgabe an der Ladevorrichtung (140) zu beeinflussen, **dadurch gekennzeichnet,**
**dass** die wenigstens eine Ladevorrichtung (140) wenigstens ein Anschlusselement (300) umfasst, welches sowohl einen Bereich (320) zum Beaufschlagen mit Gleichstrom als auch einen Bereich (330) zum Beaufschlagen mit Wechselstrom aufweist, wobei das Anschlusselement (300) abhängig von einem Signal der Steuer- und/oder Regeleinrichtung (130) wahlweise mit Gleichstrom oder mit Wechselstrom beaufschlagbar ist.

13. Ladesystem nach Anspruch 12, **dadurch gekennzeichnet, dass** eine lokale Stromquelle (112) zum Erzeugen des Gleichstroms vorgesehen ist, insbesondere eine Photovoltaikanlage.

14. Ladesystem nach Anspruch 12 oder 13, **dadurch gekennzeichnet, dass** wenigstens eine Ladestation (102) oder wenigstens eine Ladevorrichtung (220) vorgesehen ist, welche ausschließlich zum Laden mit Gleichstrom ausgebildet ist.

15. Verfahren zum Betreiben eines lokalen Ladenetzes (500) mit wenigstens einem Ladesystem (200) mit wenigstens einer Ladestation (100), **dadurch gekennzeichnet, dass** wenigstens eine Ladevorrichtung (140) der wenigstens einen Ladestation (100) zum Laden eines Elektrofahrzeugs (10) wahlweise mit Gleichstrom oder Wechselstrom beaufschlagbar ist, wobei ein Umschalten zwischen Gleichstrom und Wechselstrom abhängig von vorgebbaren Parametern des Ladesystems (200) und/oder des Elektrofahrzeugs (10) erfolgt.

16. Verfahren nach Anspruch 15, **dadurch gekennzeichnet, dass** ein Umschalten zu einer Ausgabe an der Ladevorrichtung (140) von Wechselstrom unterbleibt, wenn bei einem Umschalten zu erwarten ist, dass ein vorgegebener Maximalwert einer für das Ladenetz (500) verfügbaren elektrischen Leistung überschritten wird.

17. Verfahren nach Anspruch 15 oder 16, **dadurch gekennzeichnet, dass** ein Umschalten zu einer Ausgabe an der Ladevorrichtung (140) von Wechselstrom automatisch erfolgt, wenn ein vorgegebener Minimalwert des Gleichstroms unterschritten wird.

18. Verfahren nach einem der Ansprüche 15 bis 17, **dadurch gekennzeichnet, dass** ein Umschalten zwischen einer Ausgabe an der Ladevorrichtung (140) von Gleichstrom und einer Ausgabe von Wechselstrom abhängig von einer Prognose einer voraussichtlich verfügbaren Energiemenge und/oder einer Prognose einer voraussichtlich benötigten Energiemenge und/oder einer Tageszeit und /oder eines Wochentags und/oder einer Jahreszeit und/oder einer Priorisierung eines zu ladenden Elektrofahrzeugs (10) erfolgt.

19. Verfahren nach einem der Ansprüche 15 bis 18, **dadurch gekennzeichnet, dass** ein Umschalten und/oder Abschalten einer oder mehrerer im Ladenetz (500) integrierten Ladestationen (100) unter Berücksichtigung einer Priorisierung der Ladestation (100) und/oder des zu ladenden Elektrofahrzeugs (10) erfolgt.
